# EUROPÄISCHE PATENTANMELDUNG

(11) **EP 4 293 815 A1**
(43) Veröffentlichungstag der Anmeldung: **20.12.2023**
(21) Anmeldenummer: 23179409.0
(22) Anmeldetag: 15.06.2023
(51) Int. Cl.: H01P 5/02, H01P 5/107, H01P 5/18, H01P 5/22, H01Q 1/22

(54) **RADARANORDNUNG**

(30) Priorität: 15.06.2022 DE 102022115119; 26.05.2023 DE 102023113912
(71) Anmelder: Krohne Messtechnik GmbH, 47058 Duisburg (DE)
(72) Erfinder: Convent, Thomas, 47661 Issum (DE); Ouzounis, Herr Charalambos, 44805 Bochum (DE); Schmits, Herr Christoph, 44149 Dortmund (DE); Hammes, Markus, 46539 Dinslaken (DE)
(74) Vertreter: Gesthuysen Patentanwälte

(57) **Zusammenfassung**

Beschrieben und dargestellt ist eine Radaranordnung (1) umfassend wenigstens eine mehrlagige Leiterplatte (2), wenigstens eine Antenne (3), wenigstens eine elektronische Komponente (4) zur Erzeugung und zur Umwandlung eines Hochfrequenzsignals und wenigstens eine Leitungsstruktur (5) zur Führung des Hochfrequenzsignals zwischen der elektronischen Komponente (4) und der Antenne (3), wobei die mehrlagige Leiterplatte (2) wenigstens eine erste Lage (6) aus einem Trägermaterial und wenigstens eine zweite Lage (7) aus einem HF-Substrat aufweist, wobei das HF-Substrat eine Bestückungsseite (8) aufweist und wobei zumindest die elektronische Komponente (4) zur Erzeugung und zur Umwandlung des Hochfrequenzsignals und die Antenne (3) auf der Bestückungsseite (8) angeordnet sind und wobei die wenigstens eine Leitungsstruktur (5) zur Führung des Hochfrequenzsignals zumindest bereichsweise auf der Bestückungsseite (5) angeordnet ist, wobei die Bestückungsseite (8) zumindest im Bereich der elektronischen Komponente (4) zur Erzeugung und zur Umwandlung eines Hochfrequenzsignals vergossen ist. Die Aufgabe, eine Radaranordnung anzugeben, die einen besonders sicheren Betrieb und einen besonders hohen Explosionsschutz gewährleistet, ist dadurch gelöst, dass zwischen der ersten Lage (6) und der zweiten Lage (7) eine Metallschicht (9), die ein elektrisches Bezugspotential aufweist, angeordnet ist und dass die Leitungsstruktur (5) mit der Metallschicht (9) bereichsweise über wenigstens eine Durchkontaktierung (10) derart verbunden ist, dass die wenigstens eine Durchkontaktierung (10) einen DC-Kurzschluss bildet, sodass die Leitungsstruktur (5) und die Metallschicht (9) im Betrieb dasselbe Potential aufweisen.

## Beschreibung

Die Erfindung geht aus von einer Radaranordnung umfassend wenigstens eine mehrlagige Leiterplatte, wenigstens eine Antenne, wenigstens eine elektronische Komponente zur Erzeugung und zur Umwandlung eines Hochfrequenzsignals und wenigstens eine Leitungsstruktur zur Führung des Hochfrequenzsignals zwischen der elektronischen Komponente und der Antenne,
wobei die mehrlagige Leiterplatte wenigstens eine erste Lage aus einem Trägermaterial und wenigstens eine zweite Lage aus einem Hochfrequenz-Substrat (HF-Substrat) aufweist,
wobei das HF-Substrat eine Bestückungsseite aufweist und wobei zumindest die elektronische Komponente zur Erzeugung und zur Umwandlung des Hochfrequenzsignals und die Antenne auf der Bestückungsseite angeordnet sind und wobei die wenigstens eine Leitungsstruktur zur Führung des Hochfrequenzsignals zumindest bereichsweise auf der Bestückungsseite angeordnet ist,
wobei die Bestückungsseite zumindest im Bereich der elektronischen Komponente zur Erzeugung und zur Umwandlung eines Hochfrequenzsignals vergossen ist.

Bei der Konstruktion von Radaranordnungen, also von Leiterplatten, die Komponenten zur Erzeugung, zur Führung und zur Abstrahlung von elektromagnetischen Wellen aufweisen, ist die Sicherheit solcher Anordnungen verknüpft mit Anforderungen hinsichtlich des Explosionsschutzes, die von solchen Anordnungen einzuhalten sind.

Zu unterscheiden sind hier Anforderungen verschiedener Zündschutzarten, die das Risiko einer Funkenentstehung in explosionsfähiger Atmosphäre minimieren. Relevant im Rahmen der vorliegenden Erfindung sind insbesondere die Zündschutzart Ex i, also die Anforderungen eines eigensicheren Stromkreises, in dem kein Funke oder thermischer Effekt auftritt, der eine Zündung einer explosionsfähigen Atmosphäre verursachen kann, und die Zündschutzart Ex mb, also die Anforderungen einer Vergusskapselung, wobei Komponenten, die in explosionsfähiger Atmosphäre zünden könnten, in Vergussmasse eingebettet sind.

Aufgabe der vorliegenden Erfindung ist es, eine Radaranordnung anzugeben, die einen besonders sicheren Betrieb und einen besonders hohen Explosionsschutz gewährleistet.

Erfindungsgemäß wird die zuvor genannte Aufgabe dadurch gelöst, dass zwischen der ersten Lage und der zweiten Lage eine Metallschicht, die ein elektrisches Bezugspotential aufweist, angeordnet ist und
dass die Leitungsstruktur mit der Metallschicht bereichsweise über wenigstens eine Durchkontaktierung derart verbunden ist, dass die wenigstens eine Durchkontaktierung einen DC-Kurzschluss bildet, sodass die Leitungsstruktur und die Metallschicht im Betrieb dasselbe Potential aufweisen.

Dabei bildet die wenigstens eine Durchkontaktierung nur einen DC-Kurzschluss, wobei das Hochfrequenzsignal nicht über die Durchkontaktierung übertragen wird. So kann gewährleistet werden, dass die Durchkontaktierung die zur Antenne bzw. zur elektronischen Komponente übertragene Leistung des Hochfrequenzsignals nicht bzw. nicht wesentlich beeinflusst.

Es wurde erkannt, dass sofern die Leitungsstruktur das Bezugspotential der Radaranordnung aufweist, sich auch im Fehlerfall kein unterschiedliches Potential zwischen der Leitungsstruktur und Metallschichten, die das Bezugspotential aufweisen, einstellen kann. Insofern ist es zur Wahrung des Explosionsschutzes nicht notwendig, die Leitungsstruktur vollständig mit einer Vergussmasse zu versehen.

Die elektronische Komponente zur Erzeugung und zur Umwandlung eines Hochfrequenzsignals kann beispielsweise ein integrierter Schaltkreis (IC) sein.

Gemäß einer Ausgestaltung weist das Trägermaterial einen Verbundwerkstoff aus Glasfasergewebe und Epoxidharz, insbesondere einen Verbundwerkstoff aus einem flammenhemmenden FR-4 Verbundwerkstoff, auf. Eine solche Ausgestaltung des Trägermaterials gewährleistet einen mechanisch stabilen Aufbau und gleichzeitig eine Verbesserung des Explosionsschutzes der Radaranordnung.

Das HF-Substrat weist ein Material mit geringer Dämpfung für elektromagnetische Wellen bei Frequenzen des Hochfrequenzsignals auf. Beispielsweise weist das HF-Substrat eine Epoxidbasis auf.

Aufgrund der Durchkontaktierung zwischen der Leitungsstruktur und der Metallschicht, bestehen keine Anforderungen bezüglich eines Explosionsschutzes an die Dicke des HF-Substrats das zwischen der Leitungsstruktur und der Metallschicht angeordnet ist. Vielmehr ist die Dicke des HF-Substrats insbesondere abhängig von der zu übertragenen Frequenz sowie der Permittivität des HF-Substrats. Das HF-Substrat kann beispielsweise eine Dicke von ca. 100 µm aufweisen oder eine Dicke von ca. 200 µm oder eine Dicke von mehr als 200 µm.

Die Leitungsstruktur ist gemäß einer Ausgestaltung lediglich bereichsweise auf der Bestückungsseite angeordnet. Gemäß einer anderen Ausgestaltung ist die Leitungsstruktur vollständig auf der Bestückungsseite des HF-Substrats angeordnet.

Über die Antenne wird das Hochfrequenzsignal im Betrieb in den Außenraum abgestrahlt. Hierzu kann die Antenne als Hornantenne beispielsweise mit einem runden und/oder ovalem und/oder polygonalem, beispielsweise einem rechteckigen, Querschnitt ausgebildet sein. Alternativ kann die Antenne als Patchantenne, als Dipolantenne oder als dielektrische Stabantenne ausgebildet sein.

Gemäß einer Ausgestaltung der Radaranordnung ist die Antenne metallisch leitfähig, wobei die Antenne potentialfrei ist oder mit dem Bezugspotential verbunden.

Gemäß einer weiteren Ausgestaltung der Radaranordnung ist das Bezugspotential das Massepotential der Radaranordnung, insbesondere der elektronischen Komponente zur Erzeugung und zur Umwandlung des Hochfrequenzsignals.

Besonders bevorzugt ist wenigstens eine Durchkontaktierung im Bereich des Vergusses angeordnet. Diese Ausgestaltung weist den Vorteil auf, dass sobald die Leitungsstruktur den Bereich des Vergusses verlässt, gewährleistet ist, dass die Leitungsstruktur das Bezugspotential aufweist, sodass außerhalb des Vergusses kein Potentialunterschied zur Metallschicht entstehen kann. Damit verbessert auch diese Ausgestaltung den Explosionsschutz der Radaranordnung.

Gemäß einer nächsten bevorzugten Ausgestaltung der Radaranordnung weist die Leitungsstruktur einen ersten Leiter und einen zweiten Leiter auf, wobei der erste Leiter das Hochfrequenzsignal von der elektronischen Komponente zur Antenne hin führt und wobei der zweite Leiter das von der Antenne empfangene Hochfrequenzsignal zur elektronischen Komponente hin führt, wobei der erste Leiter und der zweite Leiter über jeweils mindestens eine einen DC-Kurzschluss bildende Durchkontaktierung mit der Metallschicht verbunden sind.

Besonders bevorzugt ist wenigstens eine Durchkontaktierung des ersten Leiters und/oder wenigstens eine Durchkontaktierung des zweiten Leiters im Bereich des Vergusses angeordnet. Gemäß einer weiteren Ausgestaltung ist sowohl der erste Leiter als auch der zweite Leiter jeweils über eine Mehrzahl von Durchkontaktierungen mit der Metallschicht verbunden, wobei wenigstens eine Durchkontaktierung des ersten Leiters und/oder wenigstens eine Durchkontaktierung des zweiten Leiters im Bereich des Vergusses angeordnet ist.

Besonders bevorzugt ist wenigstens eine Durchkontaktierung des ersten Leiters im Bereich des Vergusses angeordnet und wenigstens eine Durchkontaktierung des ersten Leiters ist außerhalb des Vergusses angeordnet und/oder wenigstens eine Durchkontaktierung des zweiten Leiters ist im Bereich des Vergusses angeordnet und wenigstens eine Durchkontaktierung des zweiten Leiters ist außerhalb des Vergusses angeordnet.

Gemäß einer weiteren bevorzugten Ausgestaltung weist der Verguss im Bereich der Leitungsstruktur einen Hohlraum auf. Da die Übertragungseigenschaften der Übertragung des Hochfrequenzsignals im Verguss weniger gut bekannt sind und darüber hinaus auch im Rahmen der Herstellung variieren können, verbessert diese Ausgestaltung die Radaranordnung im Hinblick auf die Übertragung des Hochfrequenzsignals mittels der Leitungsstruktur im Bereich des Vergusses beziehungsweise vermindert mögliche schwer einzuschätzende Einflüsse des Vergusses auf die Übertragung des Hochfrequenzsignals.

Gemäß einer weiteren bevorzugten Ausgestaltung der Radaranordnung ist eine Mehrzahl von einen DC-Kurzschluss bildende Durchkontaktierungen zwischen der Leitungsstruktur und der Metallschicht vorhanden, die zusammen mit der Leitungsstruktur und der Metallschicht einen Hohlleiter im HF-Substrat zur Führung des Hochfrequenzsignals bilden. Im Detail bildet die Anordnung aus den Durchkontaktierungen, der Leitungsstruktur und der Metallschicht eine SIW-Struktur (Substrate Integrated Waveguide Struktur).

Gemäß dieser Ausgestaltung koppelt im Betrieb das Hochfrequenzsignal von der Leitungsstruktur, vorzugsweise im Bereich des Vergusses, in das HF-Substrat ein und wird dann über den Hohlleiter zur Antenne hin übertragen und im Bereich der Antenne in den Freiraum abgestrahlt. Wird umgekehrt ein Hochfrequenzsignal von der Antenne empfangen, koppelt dieses Signal in den im HF-Substrat ausgebildeten Hohlleiter ein und wird über das Substrat in die Leitungsstruktur und anschließend in die elektronische Komponente zur Erzeugung und zur Umwandlung des Hochfrequenzsignals übertragen.

Neben den Durchkontaktierungen, die den Hohlleiter ausbilden, sind insbesondere im Bereich der elektronischen Komponente und insbesondere im Bereich der Antenne weitere Durchkontaktierungen zur Metallschicht vorhanden, die die Wellenausbreitung im HF-Substrat begrenzen. Durch die Begrenzung der Wellenausbreitung kann verhindert werden, dass das Hochfrequenzsignal sich unkontrolliert über das HF-Substrat ausbreitet, wodurch Leistung des auszusendenden Signals oder des empfangenen Signals verloren geht.

Besonders bevorzugt begrenzt der erste Leiter der Leitungstruktur einen ersten Teilhohlleiter, über den das Hochfrequenzssignal von der elektronischen Komponente zur Antenne hin geleitet wird und der zweite Leiter der Leitungsstruktur begrenzt einen zweiten Teilhohlleiter, über den das empfangene Hochfrequenzssignal von der Antenne zu der elektronischen Komponente hin geführt wird, wobei der erste Teilhohlleiter und der zweite Teilhohlleiter einen gemeinsamen Führungsbereich aufweisen. Über den gemeinsamen Führungsbereich wird realisiert, dass das Hochfrequenzsignal in die Antenne geleitet wird und das von der Antenne empfangene Hochfrequenzsignal über denselben gemeinsamen Hohlleiterabschnitt zur elektronischen Komponente übertragen wird. Der gemeinsame Führungsbereich bildet also einen Koppler zwischen dem ersten und dem zweiten Teilhohlleiter.

Außerhalb des Vergusses können der erste Leiter und der zweite Leiter auch eine gemeinsame Struktur, beispielsweise eine Metallschicht, ausbilden, die den ersten Teilhohlleiter und den zweiten Teilhohlleiter begrenzt.

Gemäß einer weiteren Ausgestaltung der Radaranordnung ist der Hohlleiter bereichsweise im Bereich des Vergusses angeordnet, sodass im Betrieb die Einkopplung des Hochfrequenzsignals in den Hohlleiter bzw. die Auskopplung des Hochfrequenzsignals aus dem Hohlleiter im Bereich des Vergusses erfolgt.

Gemäß einer anderen Ausgestaltung ist die Leitungsstruktur über wenigstens eine Stichleitung mit wenigstens einer Durchkontaktierung verbunden, wobei die Stichleitung derart dimensioniert ist, dass das Hochfrequenzsignal nicht bzw. nicht wesentlich zur Durchkontaktierung übertragen wird. Gemäß dieser Ausgestaltung wird durch das Vorhandensein der wenigstens einen Stichleitung verhindert, dass durch die Durchkontaktierungen Leistung des erzeugten oder des empfangenen Hochfrequenzsignals verloren geht. Die wenigstens eine Stichleitung weist eine Länge von n^{∗}(λ/4) auf, wobei X die Wellenlänge des erzeugten Hochfrequenzsignals ist und n eine ungerade Zahl ist.

Gemäß einer weiteren Ausgestaltung ist die Leitungsstruktur über wenigstens zwei Stichleitungen mit wenigstens zwei Durchkontaktierungen oder über wenigstens drei Stichleitungen mit wenigstens drei Durchkontaktierungen verbunden.

Weist die Leitungsstruktur einen ersten Leiter und einen zweiten Leiter auf, wobei der erste Leiter das Hochfrequenzsignal von der elektronischen Komponente zur Antenne führt und wobei der zweite Leiter das von der Antenne empfangene Hochfrequenzsignal zur elektronischen Komponente führt, ist vorzugsweise der erste Leiter über wenigstens eine Stichleitung mit wenigstens einer Durchkontaktierung verbunden und der zweite Leiter ist über wenigstens eine Stichleitung mit wenigstens einer Durchkontaktierung verbunden. Sind der erste Leiter und der zweite Leiter jeweils über genau eine Stichleitung mit einer Durchkontaktierung verbunden, so weisen die Stichleitungen vorzugsweise eine Breite von ca. 2 mm auf.

Gemäß einer nächsten Ausgestaltung ist der erste Leiter über zwei Stichleitungen mit zwei Durchkontaktierung verbunden und der zweite Leiter ist über zwei Stichleitungen mit zwei Durchkontaktierungen verbunden. Gemäß dieser Ausgestaltung weisen die Stichleitungen vorzugsweise eine Breite von ca. 1 mm auf.

Gemäß einer nächsten Ausgestaltung ist der erste Leiter über drei Stichleitungen mit drei Durchkontaktierung verbunden und der zweite Leiter ist über drei Stichleitungen mit drei Durchkontaktierungen verbunden. Gemäß dieser Ausgestaltung weisen die Stichleitungen vorzugsweise eine Breite auf, die einen Dauerstrom tragen können, der abhängig von der zu realisierenden Explosionsschutznorm ist.

Weist die Leitungsstruktur einen ersten Leiter und einen zweiten Leiter auf, wobei der erste Leiter das Hochfrequenzsignal von der elektronischen Komponente zur Antenne führt und wobei der zweite Leiter das von der Antenne empfangene Hochfrequenzsignal zur elektronischen Komponente führt, wobei der erste Leiter und der zweite Leiter über jeweils mindestens eine einen DC-Kurzschluss bildende Durchkontaktierung mit der Metallschicht verbunden sind, ist es besonders bevorzugt, wenn der erste Leiter und der zweite Leiter über einen Richtkoppler miteinander verbunden sind.

Besonders bevorzugt wird gemäß den zuvor beschriebenen Ausgestaltungen das Hochfrequenzsignal im Betrieb mittels der Leitungsstruktur zur Antenne geführt, wobei die Leitungsstruktur vollständig auf der Bestückungsseite angeordnet ist.

Es gibt nun eine Vielzahl von Möglichkeiten, die erfindungsgemäße Radaranordnung auszugestalten und weiterzubilden. Hierzu wird verwiesen auf die dem unabhängigen Patentanspruch nachgeordneten Patentansprüche sowie auf die nachfolgende Beschreibung von bevorzugten Ausführungsbeispielen in Verbindung mit der Zeichnung.

In der Zeichnung zeigen
- Fig. 1: ein erstes Ausführungsbeispiel einer Radaranordnung,
- Fig. 2: die Leitungsstruktur des ersten Ausführungsbeispiels in Draufsicht,
- Fig. 3: ein zweites Ausführungsbeispiel einer Radaranordnung
- Fig. 4: ein weiteres Ausführungsbeispiel einer Radaranordnung,
- Fig. 5: ein weiteres Ausführungsbeispiel einer Radaranordnung und
- Fig. 6: die Leitungsstruktur des in Fig. 5 dargestellten Ausführungsbeispiels in Draufsicht.

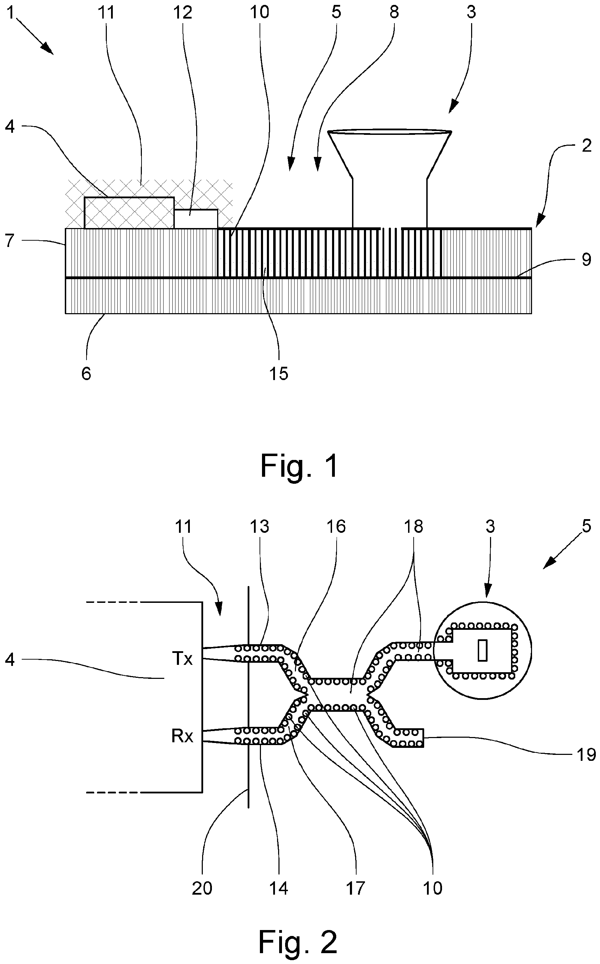

Fig. 1 zeigt rein schematisch ein erstes Ausführungsbeispiel einer Radaranordnung 1 umfassend eine mehrlagige Leiterplatte 2, eine Antenne 3, eine elektronische Komponente 4 zur Erzeugung und zur Umwandlung eines Hochfrequenzsignals, die im dargestellten Ausführungsbeispiel als IC ausgebildet ist und wenigstens eine Leitungsstruktur 5 zur Führung des Hochfrequenzsignals zwischen der elektronischen Komponente 4 und der Antenne 3.

Die mehrlagige Leiterplatte 2 weist eine erste Lage 6 aus einem Trägermaterial, das im dargestellten Ausführungsbeispiel aus einem FR4 - Verbundmaterial besteht, und eine zweite Lage 7 aus einem HF-Substrat, auf.

Die Oberseite des HF-Substrats bildet die Bestückungsseite 8 der Leiterplatte 2. Auf der Bestückungsseite 8 sind die elektronische Komponente 4 zur Erzeugung und zur Umwandlung des Hochfrequenzsignals und die Antenne 3 angeordnet. Zudem ist die Leitungsstruktur 5 zur Führung des Hochfrequenzsignals ebenfalls auf der Bestückungsseite 8 angeordnet.

Weiterhin ist die Bestückungsseite 8 im Bereich der elektronischen Komponente 4 zur Erzeugung und zur Umwandlung des Hochfrequenzsignals vergossen, sodass im Bereich der elektronischen Komponente 4 im Betrieb kein zündfähiger Funke entstehen kann.

Zwischen der ersten Lage 6 und der zweiten Lage 7 ist eine Metallschicht 9 angeordnet, die ein elektrisches Bezugspotential aufweist. Die Leitungsstruktur 5 ist mit der Metallschicht 9 bereichsweise über Durchkontaktierungen 10 derart verbunden, dass die Durchkontaktierungen 10 einen DC-Kurzschluss bilden, sodass die Leitungsstruktur 5 und die Metallschicht 9 im Betrieb dasselbe Potential aufweisen. Hierdurch kann gewährleistet werden, dass sich im Betrieb auch im Fehlerfall keine Spannungen aufbauen, die die Entstehung von Funken in zündfähiger Atmosphäre zur Folge haben können.

Die Vergussmasse 11 weist im Bereich der Leitungsstruktur 5 einen Hohlraum 12 auf, sodass die Übertragung des erzeugten Hochfrequenzsignals nicht oder nicht wesentlich durch variable Eigenschaften der Vergussmasse 11 negativ beeinflusst wird.

Die Leitungsstruktur 5 weist einen ersten Leiter 13 und einen zweiten Leiter 14 auf, wobei der erste Leiter 13 das Hochfrequenzsignal von der elektronischen Komponente 4 zur Antenne 3 führt und wobei der zweite Leiter 14 das von der Antenne 3 empfangene Hochfrequenzsignal zur elektronischen Komponente 4 führt, wobei der erste Leiter 13 und der zweite Leiter 14 jeweils einen DC-Kurzschluss bildende Durchkontaktierungen 10 mit der Metallschicht 9 verbunden sind.

Neben der Ausbildung eines DC-Kurzschlusses haben die Durchkontaktierungen 10 ebenfalls die Funktion zusammen mit der Leitungsstruktur 5 und der Metallschicht 9 einen Hohlleiter 15 im HF-Substrat auszubilden, wobei das erzeugte Hochfrequenzsignal über den Hohlleiter 15 zur Antenne 3 übertragen wird und wobei ein von der Antenne 3 empfangenes Hochfrequenzsignal über den Hohlleiter 15 zur elektronischen Komponente 4 hin übertragen wird. Dargestellt ist hier rein schematisch, dass der Hohlleiter 15 in dem HF-Substrat 7 insgesamt von dem Einkoppelbereich im Bereich der Vergussmasse 11 bis zur Antenne 3 verläuft. Damit stellt Fig. 1 keine genaue Schnittansicht von der Darstellung des Ausführungsbeispiels in Draufsicht gemäß Fig. 2 dar.

Ebenso wie in Fig. 2 dargestellt, begrenzt der erste Leiter 13 einen ersten Teilhohlleiter 16, über den das Hochfrequenzsignal von der elektronischen Komponente 4 zur Antenne 3 geleitet wird und der zweite Leiter 14 begrenzt einen zweiten Teilhohlleiter 17, über den das empfangene Hochfrequenzsignal von der Antenne 3 zu der elektronischen Komponente 4 geführt wird. Dabei weisen der erste Teilhohlleiter 16 und der zweite Teilhohlleiter 17 einen gemeinsamen Führungsbereich 18 auf, dies ist in Fig. 2 dargestellt.

Neben den dargestellten Durchkontaktierungen 10, die den Hohlleiter 15 bilden, sind weitere, hier nicht dargestellte Durchkontaktierungen vorhanden, die die Wellenausbreitung insbesondere im Bereich der Einkopplung in den Hohlleiter 15 und im Bereich der Auskopplung bei der Antenne begrenzen.

Fig. 2 zeigt die Leitungsstruktur 5 des ersten Ausführungsbeispiels in Draufsicht. Im Detail ist ein erster Leiter 13 vorhanden, der eine Mehrzahl von Durchkontaktierungen 10 aufweist, die einen ersten Teilhohlleiter 16 bilden. Über den ersten Teilhohlleiter 16 wird im Betrieb das Hochfrequenzsignal von der elektronischen Komponente 4 zur Antenne 3 hin geleitet. Der zweite Leiter 14 weist eine Mehrzahl von Durchkontaktierungen 10 auf, die einen zweiten Teilhohlleiter 17 bilden. Über den zweiten Teilhohlleiter 17 wird das empfangene Hochfrequenzsignal im Betrieb von der Antenne 3 zu der elektronischen Komponente 4 hin geführt. Zudem weisen der erste Teilhohlleiter 16 und der zweite Teilhohlleiter 17 einen gemeinsamen Führungsbereich 18 auf, sodass das Hochfrequenzsignal über denselben Hohlleiterabschnitt zur Antenne 3 hin und von der Antenne 3 weg übertragen werden kann. Das von der elektronischen Komponente 4 erzeugte Hochfrequenzsignal wird über den ersten Teilhohlleiter 16 zu dem gemeinsamen Bereich 18 mit dem zweiten Teilhohlleiter 17 geführt. Nach der Zusammenführung läuft das Hochfrequenzsignal entweder in den Hohlleiterabschnitt, der das Hochfrequenzsignal zur Antenne 3 leitet oder in den Wellensumpf 19. Das von der Antenne 3 empfangene Hochfrequenzsignal läuft über den gemeinsamen Hohlleiterabschnitt 18 zum zweiten Teilhohlleiter 17. Ein kleiner Teil kann ebenfalls in den ersten Teilhohlleiter 16 einkoppeln.

Zudem ist die Vergussgrenze 20 des Vergusses 11 im Bereich der elektronischen Komponente 4 dargestellt. Die Vergussgrenze 20 ist derart angeordnet, dass sowohl Durchkontaktierungen 10 des ersten Teilhohlleiters 16 als auch Durchkontaktierungen 10 des zweiten Teilhohlleiters 17 im Bereich des Vergusses 11 angeordnet sind.

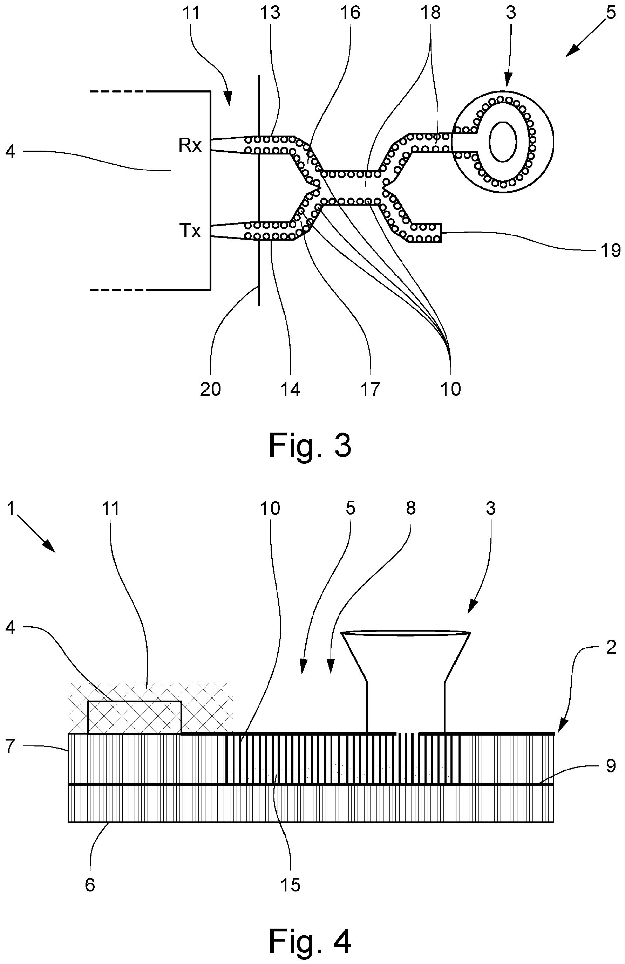

Fig. 3 zeigt ein alternatives Ausführungsbeispiel, in dem die Antenne 3 keine rechteckige, sondern eine elliptische Form aufweist. Darüber hinaus ist die Anordnung des Sendeausgangs Tx und des Empfangseingangs Rx der elektronischen Komponente 4 vertauscht. Grundsätzlich weisen die Übertragungsrichtungen zur Antenne 3 hin und von der Antenne 3 weg unterschiedliche Dämpfungen auf. Je nach Anwendung, also je nach gewünschter Dämpfung, wird daher der erste Leiter 13 zur Übertragung des Hochfrequenzsignals zur Antenne 3 genutzt oder zur Übertragung des Empfangssignals von der Antenne 3 zur elektronischen Komponente 4.

Fig. 4 zeigt ein weiteres rein schematisches Ausführungsbeispiel einer Radaranordnung 1, wobei die Signalführung, d.h. die Leitungsstruktur 5 und die Hohlleiteranordnung 15 ebenso wie in dem ersten Ausführungsbeispiel ausgebildet ist. Zudem ist die Radaranordnung 1 im Bereich der elektronischen Komponente 4 vollständig vergossen. Der Verguss 11 weist insofern auch nicht im Bereich der Leitungsstruktur 5 einen Hohlraum 10 auf. Die Führung bzw. die Einkopplung des Hochfrequenzsignals in den ersten Teilhohlleiter 16 bzw. die Auskopplung des Hochfrequenzsignals aus dem zweiten Teilhohlleiter 17 erfolgt also im Verguss 11.

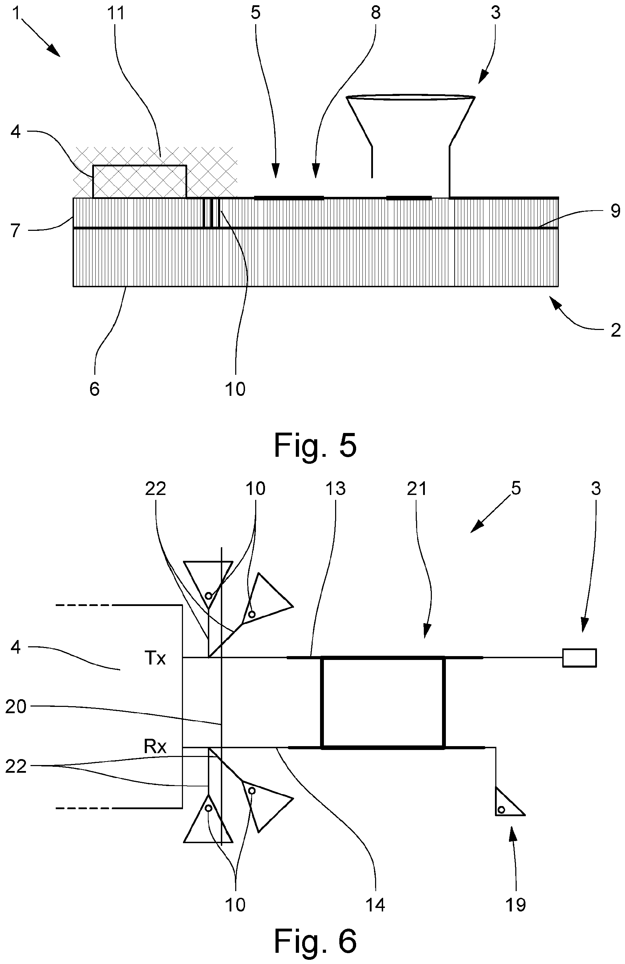

Fig. 5 zeigt ein weiteres Ausführungsbeispiel einer Radaranordnung 1 mit einer mehrlagige Leiterplatte 2, mit einer Antenne 3, mit einer elektronischen Komponente 4 zur Erzeugung und zur Umwandlung eines Hochfrequenzsignals, die im dargestellten Ausführungsbeispiel als IC ausgebildet ist und mit wenigstens einer Leitungsstruktur 5 zur Führung des Hochfrequenzsignals zwischen der elektronischen Komponente 4 und der Antenne 3.

Die mehrlagige Leiterplatte 2 weist eine erste Lage aus einem Trägermaterial, das im dargestellten Ausführungsbeispiel aus einem FR4-Verbundmaterial besteht, und eine zweite Lage 7 aus einem HF-Substrat, auf.

Die Oberseite des HF-Substrats bildet die Bestückungsseite 8 der Leiterplatte 2. Auf der Bestückungsseite 8 sind die elektronische Komponente 4 zur Erzeugung und zur Umwandlung des Hochfrequenzsignals und die Antenne 3 angeordnet. Zudem ist die Leitungsstruktur 5 zur Führung des Hochfrequenzsignal ebenfalls auf der Bestückungsseite 8 angeordnet.

Die Bestückungsseite 8 ist im Bereich der elektronischen Komponente 4 zur Erzeugung und zur Umwandlung des Hochfrequenzsignals vergossen, sodass im Bereich der elektronischen Komponente 4 im Betrieb kein zündfähiger Funke entstehen kann.

Zwischen der ersten Lage 6 und der zweiten Lage 7 ist eine Metallschicht 9 angeordnet, die ein elektrisches Bezugspotential aufweist. Die Leitungsstruktur 5 ist mit der Metallschicht 9 bereichsweise über Durchkontaktierungen 10 derart verbunden, dass die Durchkontaktierungen 10 einen DC-Kurzschluss bilden, sodass die Leitungsstruktur 5 und die Metallschicht 9 im Betrieb dasselbe Potential aufweisen. Hierdurch kann gewährleistet werden, dass sich im Betrieb keine Spannungen aufbauen, die die Entstehung von Funken in zündfähiger Atmosphäre zur Folge haben können.

Die Leitungsstruktur 5 weist einen ersten Leiter 13 und einen zweiten Leiter 14 auf, wobei der erste Leiter 13 das Hochfrequenzsignal von der elektronischen Komponente 4 zur Antenne 3 führt und wobei der zweite Leiter 14 das von der Antenne 3 empfangene Hochfrequenzsignal zur elektronischen Komponente 4 führt, wobei der erste Leiter 13 und der zweite Leiter 14 jeweils einen DC-Kurzschluss bildende Durchkontaktierungen 10 mit der Metallschicht 9 verbunden sind.

Über einen in Fig. 6 gezeigten Richtkoppler 21 sind die erste Leitung 13 und die zweite Leitung 14 miteinander verbunden.

Zudem ist die Leitungsstruktur 5 derart ausgebildet, dass die Durchkontaktierungen 10 nur einen DC-Kurzschluss bilden und das Hochfrequenzsignal nicht bzw. nicht wesentlich über die Durchkontaktierungen 10 übertragen wird.

Dazu sind der erste Leiter 13 und der zweite Leiter 14 über in Fig. 6 gezeigten Stichleitungen 22 mit den Durchkontaktierungen 10 verbunden. Die Stichleitungen 22 sind derart dimensioniert, dass sie für die Wellenlänge des Hochfrequenzsignals am Ende offen oder kurzgeschlossen sind. Im Detail weisen die Stichleitungen 22 eine Länge von n^{∗}λ/4 auf, wobei λ die Wellenlänge des Hochfrequenzsignals ist und wobei n eine ungerade Zahl ist.

Auch in diesem Ausführungsbeispiel ist wenigstens eine Durchkontaktierung 10 von jedem Leiter 13, 14 im Bereich des Vergusses 11 angeordnet und wenigstens eine Durchkontaktierung 10 von jedem Leiter 13, 14 ist außerhalb der Vergussgrenze 20 angeordnet. Damit weist das dargestellte Ausführungsbeispiel ebenfalls den Vorteil auf, dass eine besonders sichere Übertragung des Hochfrequenzsignals gewährleistet werden kann.

### Bezugszeichen

- 1: Radaranordnung
- 2: Leiterplatte
- 3: Antenne
- 4: elektronische Komponente
- 5: Leitungsstruktur
- 6: Erste Lage
- 7: Zweite Lage
- 8: Bestückungsseite
- 9: Metallschicht
- 10: Durchkontaktierung
- 11: Vergussmasse
- 12: Hohlraum
- 13: Erster Leiter
- 14: Zweiter Leiter
- 15: Hohlleiter
- 16: Erster Teilhohlleiter
- 17: Zweiter Teillhohlleiter
- 18: Gemeinsamer Führungsbereich
- 19: Wellensumpf
- 20: Vergussgrenze
- 21: Richtkoppler
- 22: Stichleitung

## Patentansprüche

1. Radaranordnung (1) umfassend wenigstens eine mehrlagige Leiterplatte (2), wenigstens eine Antenne (3), wenigstens eine elektronische Komponente (4) zur Erzeugung und zur Umwandlung eines Hochfrequenzsignals und wenigstens eine Leitungsstruktur (5) zur Führung des Hochfrequenzsignals zwischen der elektronischen Komponente (4) und der Antenne (3),
wobei die mehrlagige Leiterplatte (2) wenigstens eine erste Lage (6) aus einem Trägermaterial und wenigstens eine zweite Lage (7) aus einem HF-Substrat aufweist,
wobei das HF-Substrat eine Bestückungsseite (8) aufweist und wobei zumindest die elektronische Komponente (4) zur Erzeugung und zur Umwandlung des Hochfrequenzsignals und die Antenne (3) auf der Bestückungsseite (8) angeordnet sind und wobei die wenigstens eine Leitungsstruktur (5) zur Führung des Hochfrequenzsignals zumindest bereichsweise auf der Bestückungsseite (5) angeordnet ist,
wobei die Bestückungsseite (8) zumindest im Bereich der elektronischen Komponente (4) zur Erzeugung und zur Umwandlung eines Hochfrequenzsignals vergossen ist,
**dadurch gekennzeichnet,**
**dass** zwischen der ersten Lage (6) und der zweiten Lage (7) eine Metallschicht (9), die ein elektrisches Bezugspotential aufweist, angeordnet ist und
**dass** die Leitungsstruktur (5) mit der Metallschicht (9) bereichsweise über wenigstens eine Durchkontaktierung (10) derart verbunden ist, dass die wenigstens eine Durchkontaktierung (10) einen DC-Kurzschluss bildet, sodass die Leitungsstruktur (5) und die Metallschicht (9) im Betrieb dasselbe Potential aufweisen.

2. Radaranordnung (1) nach Anspruch 1, **dadurch gekennzeichnet, dass** die Antenne (3) metallisch leitfähig ist, wobei die Antenne (3) potentialfrei ist oder mit dem Bezugspotential verbunden ist.

3. Radaranordnung (1) nach einem der Ansprüche 1 oder 2, **dadurch gekennzeichnet, dass** das Bezugspotential das Massepotential der Radaranordnung (1), insbesondere der elektronischen Komponente (4) zur Erzeugung und zur Umwandlung des Hochfrequenzsignals, ist.

4. Radaranordnung (1) nach einem der Ansprüche 1 bis 3, **dadurch gekennzeichnet, dass** wenigstens eine Durchkontaktierung (10) im Bereich des Vergusses (11) angeordnet ist.

5. Radaranordnung (1) nach einem der Ansprüche 1 bis 4, **dadurch gekennzeichnet, dass** die Leitungsstruktur (5) einen ersten Leiter (13) und einen zweiten Leiter (14) aufweist, wobei der erste Leiter (13) das Hochfrequenzsignal von der elektronischen Komponente (4) zur Antenne (3) führt und wobei der zweite Leiter (14) das von der Antenne (3) empfangene Hochfrequenzsignal zur elektronischen Komponente (4) führt, wobei der erste Leiter (13) und der zweite Leiter (14) über jeweils mindestens eine einen DC-Kurzschluss bildende Durchkontaktierung (10) mit der Metallschicht (9) verbunden sind.

6. Radaranordnung (1) nach einem der Ansprüche 1 bis 5, **dadurch gekennzeichnet, dass** der Verguss (11) im Bereich der Leitungsstruktur (5) einen Hohlraum (12) aufweist.

7. Radaranordnung (1) nach einem der Ansprüche 1 bis 6, **dadurch gekennzeichnet, dass** eine Mehrzahl von einen DC-Kurzschluss bildende Durchkontaktierungen (10) zwischen der Leitungsstruktur (5) und der Metallschicht (9) vorhanden ist, die zusammen mit der Leitungsstruktur (5) und der Metallschicht (9) einen Hohlleiter (15) im HF-Substrat zur Führung des Hochfrequenzsignals bilden.

8. Radaranordnung (1) nach Anspruch 7, **dadurch gekennzeichnet, dass** die Durchkontaktierungen (10) derart ausgebildet und angeordnet sind, dass der erste Leiter (13) der Leitungsstruktur (5) einen ersten Teilhohlleiter (16) begrenzt, über den das Hochfrequenzsignal von der elektronischen Komponente (4) zur Antenne (3) geleitet wird und dass der zweite Leiter (14) der Leitungsstruktur (5) einen zweiten Teilhohlleiter (17) begrenzt, über den das empfangene Hochfrequenzsignal von der Antenne (3) zu der elektronischen Komponente (4) geführt wird, wobei der erste Teilhohlleiter (16) und der zweite Teilhohlleiter (17) einen gemeinsamen Führungsbereich (18) aufweisen.

9. Radaranordnung (1) nach Anspruch 7 oder 8, **dadurch gekennzeichnet, dass** der Hohlleiter (15) bereichsweise im Bereich des Vergusses (11) angeordnet ist, sodass im Betrieb die Einkopplung des Hochfrequenzsignals in den Hohlleiter (15) bzw. die Auskopplung des Hochfrequenzsignals aus dem Hohlleiter (15) im Bereich des Vergusses (1) erfolgt.

10. Radaranordnung (1) nach einem der Ansprüche 1 bis 6, **dadurch gekennzeichnet, dass** die Leitungsstruktur (5) über wenigstens eine Stichleitung (21) mit wenigstens einer Durchkontaktierung (10) verbunden ist, wobei die Stichleitung (21) derart dimensioniert ist, dass das Hochfrequenzsignal nicht bzw. nicht wesentlich zur Durchkontaktierung (10) übertragen wird.

11. Radaranordnung (1) nach einem der Ansprüche 1 bis 6 oder 10, **dadurch gekennzeichnet, dass** das Hochfrequenzsignal im Betrieb mittels der Leitungsstruktur (5) zur Antenne (3) geführt wird, wobei die Leitungsstruktur (5) vollständig auf der Bestückungsseite (8) angeordnet ist.

12. Radaranordnung (1) nach Anspruch 11, wobei die Leitungsstruktur (5) einen ersten Leiter (13) und einen zweiten Leiter (14) aufweist, wobei der erste Leiter (13) das Hochfrequenzsignal von der elektronischen Komponente (4) zur Antenne (3) führt und wobei der zweite Leiter (14) das von der Antenne (3) empfangene Hochfrequenzsignal zur elektronischen Komponente (4) führt, wobei der erste Leiter (13) und der zweite Leiter (14) über jeweils mindestens eine einen DC-Kurzschluss bildende Durchkontaktierung (10) mit der Metallschicht (9) verbunden sind, **dadurch gekennzeichnet, dass** der erste Leiter (13) und der zweite Leiter (14) über einen Richtkoppler (21) miteinander verbunden sind.
